# FASCICULE DE BREVET EUROPEEN

(11) **EP 3 389 233 B1**
(45) Date de publication et mention de la délivrance du brevet: **20.11.2024**
(21) Numéro de dépôt: 18166573.8
(22) Date de dépôt: 10.04.2018
(51) Int. Cl.: H04L 45/00, H04L 45/12, H04B 3/54

(54) **PROCEDE DE DETERMINATION D'UN COUT D'UN LIEN**
VERFAHREN ZUR KOSTENBESTIMMUNG EINER VERKNÜPFUNG
METHOD FOR DETERMINING A COST OF A LINK

(30) Priorité: 12.04.2017 FR 1753211
(43) Date de publication de la demande: 17.10.2018
(73) Titulaire: Sagemcom Energy & Telecom SAS, 92270 Bois-Colombes (FR)
(72) Inventeur: ROTER, Ziv, 92500 Rueil Malmaison (FR); SERGI, Jérémie, 92500 Rueil Malmaison (FR)
(74) Mandataire: Cabinet Le Guen Maillet

(56) Documents cités:
- EP-A1- 2 999 163
- CN-A- 102 932 257
- US-B1- 9 008 073
- Q15/SG15 RAPPORTEUR: "Draft Revised Recommendation ITU-T G.9903", vol. 15/15, 2 April 2017 (2017-04-02), pages 1 - 198, XP044202067, Retrieved from the Internet <URL:https://www.itu.int/ifa/ties/Mtgs17/Q15/Teleconferences/2017-03-Q15-R03.docx> [retrieved on 20170402]
- ERDF: "G.g3-plc: LQI and Metric Improvements (CCTT103 + CCTT104 + CCTT110 + CCTT111 + CCTT132);TD2013- 10-Q15-027", ITU-T DRAFT ; STUDY PERIOD 2013-2016, INTERNATIONAL TELECOMMUNICATION UNION, GENEVA ; CH, vol. 15/15, 20 January 2014 (2014-01-20), pages 1 - 7, XP044003851

## Description

### Technique antérieure

La présente invention concerne le domaine des réseaux de communications maillés, c'est-à-dire un réseau de communication dans lequel différents dispositifs électroniques du réseau sont connectés pair à pair. L'invention concerne plus particulièrement le domaine des réseaux de communications par courant porteur en ligne, notamment les réseaux de communications conformes à la norme G3-PLC (« *G3-Power Line Communication* » en anglais) développée par la « G3-PLC Alliance ».

Un réseau de communication maillé (ci-après « réseau ») conforme à la norme G3-PLC comprend typiquement un premier dispositif électronique, dit concentrateur de données (ci-après « concentrateur »), placé à la racine du réseau, et une pluralité de dispositifs électroniques, par exemple des compteurs électriques communicants (ci-après « compteurs »). Chaque dispositif électronique, le concentrateur comme les compteurs, est aussi appelé un noeud du réseau. La qualité de communication entre deux noeuds dépend de la distance entre ces deux noeuds, ladite distance impliquant une atténuation des signaux émis sur le média partagé, typiquement un réseau électrique. Ainsi, il n'est pas forcément possible d'établir une communication directe entre deux noeuds du réseau. Deux noeuds pouvant communiquer de façon directe, c'est à dire de pair à pair, sont dits « voisins ». Chaque noeud met en oeuvre un protocole de routage, par exemple conforme à la norme G3-PLC, permettant de définir des routes afin de permettre des échanges de messages, ou paquets de données, entre chaque noeud, particulièrement entre ceux n'ayant pas de lien direct, c'est-à-dire n'étant pas voisins. Une route entre deux noeuds est définie par une liste de noeuds voisins, chaque noeud de la liste relayant un éventuel message émis par un noeud émetteur vers un noeud voisin suivant dans la liste pour atteindre le noeud de destination. Le protocole de routage a typiquement pour objectif de sélectionner une route entre deux noeuds parmi une pluralité de routes possibles, la route sélectionnée correspondant à un ou plusieurs critères de qualité. Il est ainsi fréquent de vouloir sélectionner la route entre deux noeuds ayant un coût minimal. Un coût pour une route peut être défini comme étant la somme des coûts de chaque lien entre les noeuds voisins définissant ladite route. Le coût d'un lien entre deux noeuds voisins peut être défini en fonction de la qualité de la communication entre ces deux noeuds. Le coût d'un lien entre un premier et un deuxième noeuds, les noeuds étant voisins, peut ainsi être défini suivant le rapport signal-bruit d'un message, envoyé par le premier noeud, reçu par le deuxième noeud voisin. Dans le protocole G3-PLC, le paramètre LQI (« *Link Quality Indicator* » en anglais) est ainsi déterminé pour chaque message reçu par un noeud en fonction du rapport signal-bruit de ce message reçu. Le coût d'une route peut être défini en fonction des LQI des liens qui composent cette route. Un procédé de détermination du LQI peut être trouvé dans la norme G3-PLC, révision d'avril 2015, chapitre « *7.17.1.3* - *PD-DATA. indication* ». Afin de favoriser des liens ayant comparativement une bonne qualité de communication, le protocole de routage dans G3-PLC cherche à minimiser le coût de la route entre deux noeuds, c'est-à-dire, si la métrique définie dans l'« *Annex B* » du standard est utilisée avec les paramètres par défaut, choisir des liens ayant des LQI les plus élevés possibles.

Cependant, la qualité de la communication entre deux noeuds dépend aussi d'éventuelles interférences présentes, ponctuellement ou non, sur le média partagé. Des interférences sont produites par une source d'interférences, ou source de bruit, par exemple un dispositif électronique avec une mauvaise isolation électromagnétique. Des interférences ponctuelles, ou non, présentes sur le média de communication partagé viennent s'ajouter au bruit et diminuer le rapport signal-bruit d'un message reçu par un noeud perturbé par lesdites interférences. Des interférences, tout comme un message émis sur le média partagé, sont atténuées selon la distance entre la source d'interférences et le noeud subissant les interférences. Dit autrement, plus une source d'interférences est proche d'un noeud, plus celui-ci est perturbé par les interférences, plus le rapport signal-bruit d'un message reçu par ce noeud est diminué. Cela a pour conséquence que le coût d'un lien entre deux noeuds doit être considéré de façon asymétrique, le coût du lien d'un premier noeud vers un deuxième noeud pouvant être différent de celui du deuxième noeud vers le premier noeud. Dit autrement, le rapport signal-bruit d'un premier message, émis par le premier noeud, reçu par le deuxième noeud peut être différent du rapport signal-bruit d'un deuxième message, émis par le deuxième noeud, reçu par le premier noeud (les messages étant émis avec une même puissance par chaque noeud). Ainsi, si des interférences sont présentes sur le média partagé, la source des interférences étant localisée comparativement plus proche du premier noeud que du deuxième noeud, alors le rapport signal-bruit du premier message, émis par le premier noeud, reçu par le deuxième noeud est plus grand que le rapport signal-bruit du deuxième message, émis par le deuxième noeud, reçu par le premier noeud, dans la mesure où le premier et le deuxième messages sont émis avec une même puissance d'émission. Dit autrement, dans ce cas, le LQI du premier message déterminé par le deuxième noeud est plus grand que le LQI du deuxième message déterminé par le premier noeud. Le lien entre le premier et le deuxième noeuds est dit asymétrique.

Le protocole G3-PLC tel que défini dans sa révision publiée en avril 2015 définit un procédé de détermination d'un coût d'un lien (chapitre « 9.4.3.2.6 - *Link cost computation* », détermination du coût d'un lien en anglais et aussi « *Annex B* - *Routing cost »,* coût de routage en anglais, particulièrement la figure B.1). Le procédé tient compte de l'éventuelle asymétrie du lien.

Le document US 9 008 073 B1 (RAZAZIAN KAVEH [US] ET AL) 14 avril 2015, décrit un système comportant un noeud de destination qui attend une période prédéterminée pour recevoir des paquets de demande d'itinéraire supplémentaires comprenant un coût d'itinéraire de l'un des noeuds intermédiaires correspondant à un noeud voisin du noeud de destination lorsque le noeud de destination reçoit le paquet de demande d'itinéraire. Le noeud de destination identifie une sélection parmi le paquet de demande d'itinéraire et les paquets de demande d'itinéraire supplémentaires comprenant un coût d'itinéraire le plus bas après avoir attendu la période prédéterminée. Le noeud de destination transmet un paquet de réponse d'itinéraire unicast à un noeud source pour identifier l'itinéraire sélectionné.

### Exposé de l'invention:

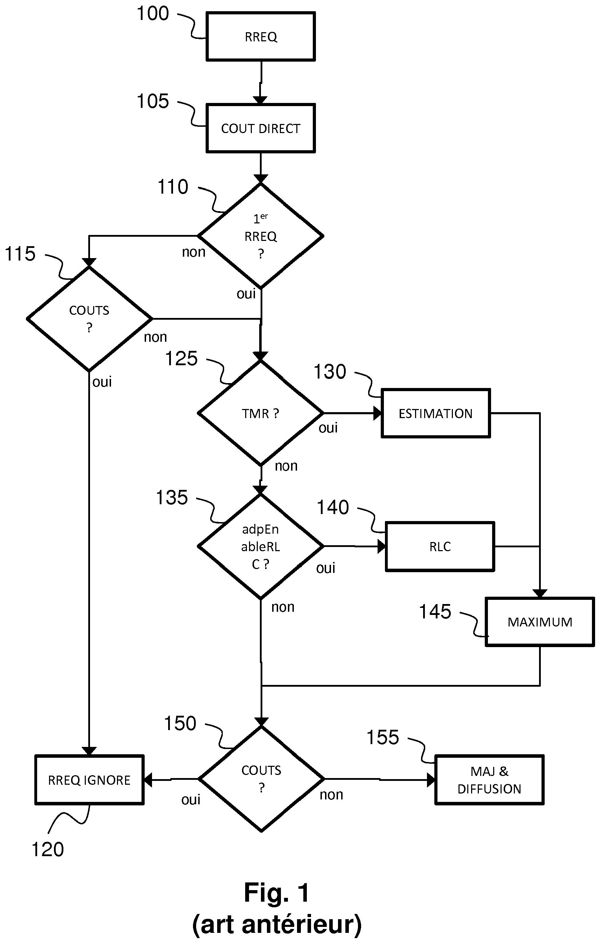

Le procédé de détermination d'un coût d'un lien entre deux noeuds (ou dispositifs électroniques) divulgué dans la norme G3-PLC, particulièrement dans l'« *Annex B »,* est décrit succinctement dans la Fig. 1. Le procédé décrit ci-après est exécuté par un premier noeud P du réseau de communication maillé, par exemple le concentrateur ou un compteur. Typiquement, chaque noeud du réseau exécute le procédé.

Dans une première étape 100, le premier noeud P reçoit un message de détermination d'une route entre deux noeuds du réseau (message dit RREQ, *« Route REQuest* » en anglais). La route à déterminer est par exemple entre un noeud A et un noeud B du réseau. Le noeud A est à l'origine de l'émission du message de détermination de la route vers le noeud B. Le message comprend typiquement une adresse source, l'adresse source correspondant à un deuxième noeud D - un noeud voisin - ayant émis, ou relayé, le message de détermination de route. Le message comprend typiquement un coût de la route entre le noeud A et le deuxième noeud. Le message comprend typiquement une adresse destination, l'adresse destination correspondant à celle du noeud B, le noeud B étant le destinataire final du message de détermination de route.

Dans une étape suivante 105, le premier noeud P détermine un premier coût du lien entre le deuxième noeud D et le premier noeud P en fonction d'une mesure d'une qualité de réception du premier message. Typiquement, le premier noeud P détermine dans un premier temps un LQI associé au premier message reçu en fonction du rapport signal-bruit du premier message reçu. Le rapport signal-bruit du message reçu est une mesure de la qualité de réception du premier message reçu. Le premier coût du lien est déterminé dans un deuxième temps à partir du LQI déterminé, comme décrit dans la formule divulguée dans la norme G3-PLC, *Annex B.* Le premier coût déterminé par le premier noeud P lors de l'étape 105 est dit « coût direct » du lien. Le coût direct correspond de fait au coût du lien partant du deuxième noeud D vers le premier noeud P. On définit le coût indirect comme étant le coût du lien dans le sens opposé, c'est-à-dire du premier noeud P vers le deuxième noeud D. Le coût direct et le coût indirect sont égaux pour un lien symétrique, et sont différents dans le cas d'un lien asymétrique.

Dans une étape suivante 110, le premier noeud P détermine si le message reçu lors de l'étape 100 est le premier message de détermination d'une route entre les même deux noeuds A et B du réseau reçu. Dit autrement, le premier noeud P vérifie s'il a reçu précédemment, possiblement émis par un autre noeud voisin, un message dit RREQ afin de déterminer une route entre les deux noeuds A et B du réseau. Si le premier noeud P a déjà reçu un autre message RREQ, alors le premier noeud P passe à l'étape 115, sinon le premier noeud P passe à l'étape 125.

Dans l'étape 115, le premier noeud P a reçu précédemment au moins un autre message de détermination de route entre les noeuds A et B, possiblement depuis un troisième noeud T. Un coût d'une route de A jusqu'au premier noeud P, via le troisième noeud T, a donc précédemment été déterminé par le premier noeud P. Ledit coût est déterminé en ajoutant au coût de la route entre A et le troisième noeud T, ledit coût étant compris dans le message de détermination de route envoyé par le troisième noeud T, le coût du lien entre le troisième noeud T et le premier noeud P, ledit coût étant déterminé par le premier noeud P. Dans l'étape 115, le premier noeud P compare le coût de la route via le troisième noeud T déterminé précédemment avec un coût de la route déterminé en ajoutant le coût de la route reçu par le deuxième noeud D et le premier coût du lien déterminé lors de l'étape 105. Dit autrement, le premier noeud P compare le coût de la route via le troisième noeud T et via le deuxième noeud D, sachant que le coût du lien entre le deuxième noeud D et le premier noeud P est pour le besoin de cette étape considéré égal au résultat de l'étape 105. En effet, le coût du lien déterminé lors de l'étape 105 est un coût minimal comme expliqué ci-après. Dans l'hypothèse où la somme du coût de la route reçue via le deuxième noeud D et du lien déterminé lors de l'étape 105 est supérieure au coût de la route via le troisième noeud T précédemment déterminé, alors le premier noeud P passe à l'étape 120. Sinon, le premier noeud P passe à l'étape 125.

L'étape 120 est exécutée par le premier noeud P lorsque le coût de la route via le deuxième noeud D est supérieur au coût d'une route précédemment déterminée. Cela signifie que la route entre A et B et passant par le deuxième noeud D et le premier noeud P est moins favorable que la route précédemment déterminée par le premier noeud P, le message de détermination de route est donc ignoré par le premier noeud P. Le procédé s'arrête ici jusqu'à réception d'un nouveau message de détermination d'une route pour deux noeuds.

Dans l'étape 125, le premier noeud P détermine si des informations concernant le coût du lien indirect entre le deuxième noeud D et le premier noeud P ont été précédemment enregistrées dans une mémoire du premier noeud P. Comme décrit dans la norme G3-PLC (version publiée en avril 2015), ces informations peuvent correspondre à un message dit TMR (« *Tone Map Response »* en anglais) reçu précédemment. Le premier noeud P comprend possiblement une table dite « table des voisins » (« *neigbour table »* en anglais) comprenant des informations de qualité associées à chaque voisin du premier noeud P. Ladite table des voisins est par exemple la « *neigbour table* » définie dans la norme G3-PLC dans la « *Table 9-20* » (en page 103 de la révision d'avril 2015). Si oui, le premier noeud P passe à l'étape 130 afin de déterminer ou estimer un coût indirect du lien à partir des informations présentes. Sinon, le premier noeud P passe à l'étape 135.

Dans l'étape 130, le premier noeud P détermine un coût indirect du lien entre le deuxième noeud D et le premier noeud P en fonction d'informations d'un message TMR enregistré dans la mémoire du premier noeud P ou d'informations comprises dans la table des voisins. Le premier noeud P peut aussi estimer un coût indirect du lien en fonction d'informations de qualité d'un message reçu comme la modulation dudit message reçu. L'étape 130 permet au premier noeud P de déterminer une estimation du coût indirect du lien entre le deuxième noeud D et le premier noeud P. Le premier noeud P passe ensuite à l'étape 145.

Dans l'étape 145, le premier noeud P compare le coût direct, c'est-à-dire le premier coût du lien déterminé lors de l'étape 105, avec le coût indirect du lien, c'est-à-dire le coût du lien déterminé lors de l'étape 130 ou de l'étape 140 (décrite ci-après). Si les deux valeurs sont égales, le lien est alors symétrique, le premier noeud P détermine le coût de la route depuis le noeud A via le deuxième noeud D en utilisant le coût direct ou indirect, les deux coûts étant égaux.

Si les deux valeurs sont différentes, alors le lien est asymétrique. Le premier noeud P détermine alors une route en utilisant le coût le plus élevé entre le coût direct et le coût indirect. Dit autrement, le coût du lien entre le deuxième noeud D et le premier noeud P est choisi égal au maximum entre le coût direct et le coût indirect. Le premier noeud P passe ensuite à une étape 150.

Dans l'étape 150, le premier noeud P compare le coût de la route déterminé en fonction du coût du lien avec un coût de la route possiblement précédemment déterminé lors d'une itération précédente du présent procédé. Si le coût actuel de la route est supérieur à un coût précédemment déterminé, alors la route actuelle est ignorée, et le premier noeud P passe à l'étape 120.

Si au contraire le coût actuel de la route est inférieur, alors le premier noeud P passe à l'étape 155.

Dans une étape 155, le premier noeud P met à jour les informations concernant la meilleure route depuis A vers B, par exemple la table de routage enregistrée dans la mémoire du premier noeud P, et diffuse à ses voisins un message de détermination de route entre les noeuds A et B (sauf dans le cas où le premier noeud P est le noeud final B). Le procédé s'arrête ici, une nouvelle itération du procédé est exécutée lors de la réception d'un nouveau message de détermination d'une route.

Dans une étape 135, le premier noeud P détermine la valeur d'un paramètre de configuration « *adpRLCEnabled* » (cf. *table 9-27* de la norme G3-PLC) ou d'un paramètre de configuration « *adpEnableRLC » (Annex B* de la norme G3-PLC) (les deux paramètres n'en faisant qu'un, la norme publiée en avril 2015 comprenant une erreur typographique). La valeur desdits paramètres de configuration est le résultat d'une configuration du premier noeud P. Le premier noeud P est ainsi typiquement configuré via un message de configuration comprenant une commande afin de fixer la valeur desdits paramètres de configuration *« adpRLCEnabled »* (ou *« adpEnableRLC* »). Selon la valeur du paramètre de configuration, le premier noeud P est adapté afin de réaliser, ou non, un procédé dit RLC (« *Reverse Link Cost »* en anglais) permettant de faire déterminer par le deuxième noeud D un coût indirect du lien et non seulement l'estimer. Si le premier noeud P est configuré pour exécuter le procédé RLC, alors le premier noeud P passe à l'étape 140. Sinon, le premier noeud P passe à l'étape 150. Il est à noter que la configuration du premier noeud P est globale et ne dépend pas par exemple de l'origine du message reçu lors de l'étape 100, c'est-à-dire du lien considéré.

Dans l'étape 140, le premier noeud P exécute le procédé RLC de détermination de coût indirect du lien. Ledit procédé RLC est décrit dans la norme G3-PLC et comprend l'émission d'un message dit RLCREQ (« *Reverse Link Cost REQuest* » en anglais) et la réception en retour d'un message dit RLCREP (« *Reverse Link Cost REPly* » en anglais). Le message de retour RLCREP comprend une détermination, par le deuxième noeud D, du coût du lien, coût indirect du lien du point de vue du premier noeud P. Le premier noeud P passe ensuite à l'étape 145.

Ainsi, en l'absence d'information permettant d'estimer ou de connaître un coût indirect d'un lien, chaque noeud peut être configuré pour exécuter un procédé RLC de détermination du coût indirect (étape 140).

Toutefois, chaque noeud du réseau doit être configuré manuellement et individuellement. Il n'est pas judicieux de configurer tous les noeuds d'un réseau pour qu'ils exécutent le procédé de détermination d'un cout indirect d'un lien, car exécuter un procédé RLC implique l'échange de messages (message *RLCREQ* et message *RLCREP)* sur le média partagé, ce qui peut aboutir à des collisions ou congestions. D'un autre côté, désactiver le procédé RLC sur tous les noeuds du réseau revient à se priver d'un procédé de détermination par un deuxième noeud d'un coût indirect d'un lien particulièrement utile lorsqu'un noeud comprend des liens asymétriques. Le procédé RLC d'un noeud peut être activé manuellement, particulièrement quand un lien est suspecté d'être asymétrique. Toutefois, cette activation est très difficile à prédire pour un noeud, l'asymétrie des liens provenant de sources d'interférences pouvant être ponctuelles, et étant souvent aléatoires. De même, l'activation est valable pour tous les liens d'un même noeud, alors même que seuls quelques liens d'un noeud peuvent être asymétriques.

Il est donc nécessaire de proposer un procédé permettant une détermination optimale d'un coût d'un lien entre un premier noeud P et un deuxième noeud D, particulièrement lorsque ledit lien est symétrique.

L'invention concerne un procédé de détermination d'un coût d'un lien entre un premier dispositif électronique et un deuxième dispositif électronique pour un protocole de routage d'un réseau de communication maillé comprenant lesdits dispositifs électroniques, le premier dispositif électronique comprenant, associé au deuxième dispositif électronique, un premier et un deuxième modes de fonctionnement, le procédé étant exécuté par le premier dispositif électronique et comprenant les étapes de : recevoir en provenance du deuxième dispositif électronique un premier message de détermination d'une route entre deux dispositifs électroniques du réseau de communication, déterminer un premier coût du lien en fonction d'une mesure d'une qualité de réception du premier message, déterminer le mode de fonctionnement du premier dispositif électronique associé au deuxième dispositif électronique, et, quand le premier dispositif électronique est dans le premier mode de fonctionnement, alors envoyer à destination du deuxième dispositif électronique un deuxième message comprenant une instruction de mesure par le deuxième dispositif électronique d'une qualité de réception dudit deuxième message afin de déterminer un deuxième coût du lien et recevoir, en provenance du deuxième dispositif électronique, un troisième message, le troisième message comprenant le deuxième coût du lien, déterminer le coût du lien en fonction du premier coût et du deuxième coûts, le procédé comprenant une étape de sélection du mode de fonctionnement associé au deuxième dispositif électronique, ladite étape de sélection étant exécutée par le premier dispositif électronique de façon autonome en fonction de un ou plusieurs critères déterminés par le premier dispositif électronique.

Avantageusement, le premier dispositif électronique, ou premier noeud, peut déterminer de façon autonome s'il est judicieux d'exécuter un procédé RLC de détermination d'un coût indirect d'un lien. Chaque dispositif électronique peut se configurer dynamiquement, sans action manuelle d'un administrateur ou sans besoin d'un dispositif électronique de configuration central. Avantageusement, les risques de collisions ou de congestions sont réduits par rapport à un réseau dans lequel le procédé RLC est activé par défaut, tout en permettant une activation autonome et automatique pour chaque noeud lorsqu'un lien est potentiellement asymétrique.

Selon un mode de réalisation complémentaire de l'invention, l'étape de sélection du mode de fonctionnement associé au deuxième dispositif électronique est exécutée par le premier dispositif électronique de façon autonome en fonction de un ou plusieurs critères parmi :
- un nombre d'erreurs de transmission de messages à destination du deuxième dispositif électronique,
- une caractéristique du deuxième dispositif électronique, et,
- une comparaison entre une mesure de la qualité de réception d'un message et une information de qualité déterminée en fonction d'un paramètre dudit message.

Avantageusement, le procédé RLC est activé automatiquement pour un dispositif électronique ou noeud lorsque des paramètres sont indicatifs d'une possible asymétrie du lien (premier mode de fonctionnement). De nombreuses erreurs de transmission de messages peuvent être liées à une qualité de réception d'un noeud voisin bien inférieur à la qualité de réception du noeud, à cause de l'asymétrie du lien. De même, l'expérience peut montrer que certains noeuds sont sujets plus fréquemment à une asymétrie.

C'est par exemple le cas du concentrateur, on peut donc considérer que tout message de détermination d'une route provenant du concentrateur (déterminable en fonction de l'adresse source du message) doit activer le procédé RLC de détermination du coût indirect du lien pour le noeud voisin du concentrateur.

Selon un mode de réalisation complémentaire de l'invention, l'étape de sélection du mode de fonctionnement associé au deuxième dispositif électronique comprend les étapes suivantes : durant un temps prédéterminé, comptabiliser un nombre d'erreurs de transmission de messages envoyés par le premier dispositif électronique vers le deuxième dispositif électronique et, lorsque le nombre d'erreurs comptabilisées dépasse une première valeur, alors sélectionner le premier mode de fonctionnement, sinon, sélectionner le deuxième mode de fonctionnement.

Avantageusement, le premier dispositif électronique ou noeud peut déterminer de façon autonome son mode de fonctionnement en fonction d'un nombre d'erreurs.

Selon un mode de réalisation complémentaire de l'invention, l'étape de sélection du mode de fonctionnement associé au deuxième dispositif électronique comprend les étapes suivantes : durant un temps prédéterminé, comptabiliser un nombre d'erreurs de transmission de messages envoyés par le premier dispositif électronique vers le deuxième dispositif électronique et, lorsque le ratio entre le nombre d'erreurs comptabilisées et le nombre de messages envoyés par le premier dispositif électronique vers le deuxième dispositif électronique dépasse une deuxième valeur, alors sélectionner le premier mode de fonctionnement, sinon, sélectionner le deuxième mode de fonctionnement.

Avantageusement, le premier dispositif électronique ou noeud peut déterminer de façon autonome son mode de fonctionnement en fonction d'un ratio du nombre d'erreurs.

Selon un mode de réalisation complémentaire de l'invention, l'étape de sélection du mode de fonctionnement associé au deuxième dispositif électronique comprend les étapes suivantes : recevoir un message en provenance du deuxième dispositif électronique, mesurer une qualité de réception du message reçu, déterminer une qualité de réception d'un message reçu par le deuxième dispositif électronique en fonction d'une information associée au deuxième noeud retrouvée dans une table des voisins enregistrée par le premier noeud, et, lorsque la différence entre la qualité mesurée et la qualité déterminée dépasse une troisième valeur, alors sélectionner le premier mode de fonctionnement, sinon, sélectionner le deuxième mode de fonctionnement.

L'invention concerne également un dispositif électronique d'un réseau de communication maillé, le dispositif électronique étant adapté pour déterminer un coût d'un lien entre ledit dispositif électronique et un dispositif électronique voisin du réseau de communication maillé pour un protocole de routage, le dispositif électronique comprenant, associé au dispositif électronique voisin, un premier et un deuxième modes de fonctionnement, le dispositif électronique étant adapté pour :
- recevoir en provenance du dispositif électronique voisin un premier message de détermination d'une route entre deux dispositifs électroniques du réseau de communication,
- déterminer un premier coût du lien en fonction d'une mesure d'une qualité de réception du premier message,
- déterminer le mode de fonctionnement du dispositif électronique associé au dispositif électronique voisin, et,
- quand le dispositif électronique est dans le premier mode de fonctionnement, alors :
   - envoyer à destination du dispositif électronique voisin un deuxième message comprenant une instruction de mesure par le dispositif électronique voisin d'une qualité de réception dudit deuxième message afin de déterminer un deuxième coût du lien, et,
   - recevoir, en provenance du dispositif électronique voisin, un troisième message, le troisième message comprenant le deuxième coût du lien,
   - déterminer le coût du lien en fonction du premier coût et du deuxième coûts,
le dispositif électronique étant adapté pour sélectionner le mode de fonctionnement associé au dispositif électronique voisin de façon autonome en fonction de un ou plusieurs critères déterminés par le dispositif électronique.

Selon un mode de réalisation complémentaire de l'invention, le dispositif électronique est adapté pour sélectionner le mode de fonctionnement associé au dispositif électronique voisin de façon autonome en fonction de un ou plusieurs critères parmi :
- un nombre d'erreurs de transmission de messages à destination du dispositif électronique voisin,
- une caractéristique du dispositif électronique voisin, et,
- une comparaison entre une mesure de la qualité de réception d'un message et une information de qualité déterminée en fonction d'une information associée au deuxième noeud retrouvée dans une table des voisins enregistrée par le premier noeud.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter tout ou partie des étapes du procédé de détermination d'un coût d'un lien mentionné ci-dessous, lorsque ledit programme est exécuté par le processeur.

L'invention concerne également un medium de stockage d'informations ou support d'enregistrement comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la **Fig. 1** illustre schématiquement un procédé de détermination d'un coût d'un lien pour un protocole de routage d'un réseau de communication maillé connu de l'homme du métier, par exemple selon la norme G3-PLC ;
- la **Fig. 2** illustre schématiquement un procédé de détermination d'un coût d'un lien pour un protocole de routage d'un réseau de communication maillé selon un mode de réalisation de l'invention ;
- La **Fig. 3** illustre schématiquement un procédé permettant de sélectionner un mode de fonctionnement d'un dispositif électronique selon un mode de réalisation de l'invention ;
- la **Fig. 4** illustre schématiquement l'architecture matérielle d'un dispositif électronique d'un réseau de communication maillé, le dispositif électronique étant adapté pour déterminer un coût d'un lien entre ledit dispositif électronique et un dispositif électronique voisin du réseau de communication maillé pour un protocole de routage, selon un mode de réalisation de l'invention.

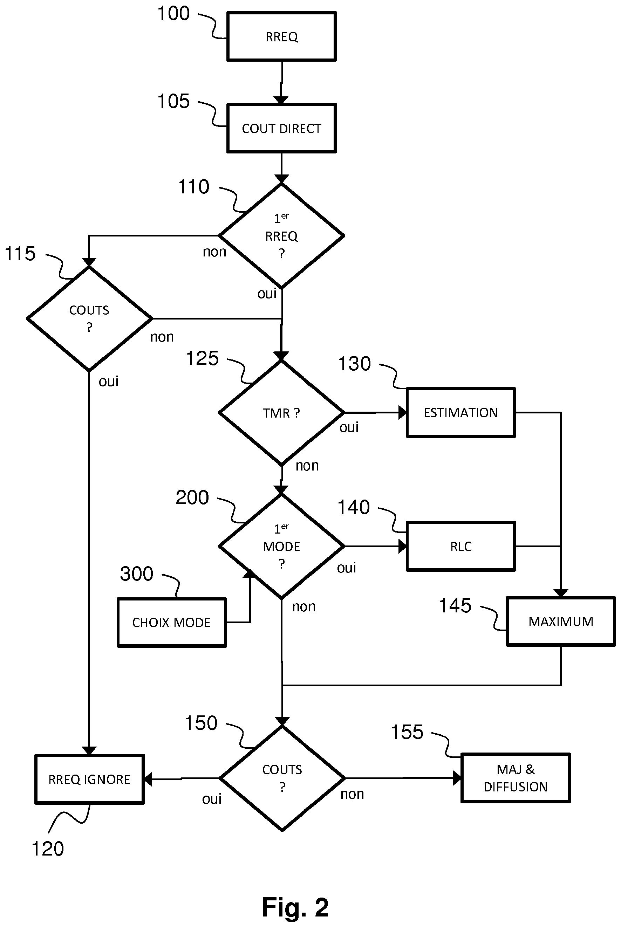

La **Fig. 2** illustre schématiquement un procédé de détermination d'un coût d'un lien entre un premier noeud P (ou dispositif électronique) et un deuxième noeud D pour un protocole de routage d'un réseau de communication maillé comprenant lesdits noeuds, le premier noeud P comprenant, associé au deuxième noeud D, un premier et un deuxième modes de fonctionnement, le procédé étant exécuté par le premier noeud P et comprenant les étapes de :
- recevoir (étape 100) en provenance du deuxième noeud D un premier message de détermination d'une route entre deux noeuds du réseau de communication,
- déterminer (étape 105) un premier coût du lien en fonction d'une mesure d'une qualité de réception du premier message,
- déterminer (étape 200) le mode de fonctionnement du premier noeud P associé au deuxième noeud D, et,
- quand le premier noeud P est dans le premier mode de fonctionnement, alors :
   - envoyer (étape 140) à destination du deuxième noeud D un deuxième message comprenant une instruction de mesure par le deuxième noeud D d'une qualité de réception dudit deuxième message afin de déterminer un deuxième coût du lien, et,
   - recevoir (étape 140), en provenance du deuxième noeud D, un troisième message, le troisième message comprenant le deuxième coût du lien,
   - déterminer (étape 145) le coût du lien en fonction du premier coût et du deuxième coût,
le procédé comprenant une étape 300 de sélection du mode de fonctionnement associé au deuxième noeud D, ladite étape de sélection étant exécutée par le premier noeud P de façon autonome en fonction de un ou plusieurs critères déterminés par le premier noeud P.

Dit autrement, le procédé décrit dans la Fig. 2 diffère du procédé précédemment décrit dans la Fig. 1 au moins en ce que :
- le premier noeud P exécutant le procédé comprend un premier mode de fonctionnement et un deuxième mode de fonctionnement associé pour chaque voisin, ou, dit autrement, pour chaque lien ;
- le premier noeud P exécute une étape 300 de sélection du mode de fonctionnement, et ce de façon autonome et possiblement continue ;
- le premier noeud P exécute une étape 200 de détermination du mode de fonctionnement ;
- le premier noeud P, lorsqu'il est dans le premier mode, exécute un procédé (étape 140) de détermination d'un coût indirect du lien.

Selon un mode de réalisation de l'invention, le premier noeud P n'exécute pas de procédé RLC, et ce quel que soit le lien considéré, lorsqu'il est dans le deuxième mode de fonctionnement (deuxième mode de fonctionnement équivalent au mode décrit dans la Fig. 1 avec à « *adpRLCEnabled* » - ou « *adpEnableRLC »* - égal à « 0 » selon *Annex B* de la norme G3-PLC).

Selon un autre mode de réalisation de l'invention, le premier noeud P exécute un procédé RLC, pour déterminer un coût d'un lien, et ce pour tous les liens, lorsqu'il est dans le deuxième mode de fonctionnement (deuxième mode de fonctionnement équivalent au mode décrit dans la Fig. 1 avec *« adpRLCEnabled »* - ou *« adpEnableRLC* » - égal à « 1 » selon *Annex B* de la norme G3-PLC).

Il est à noter que le deuxième mode de fonctionnement peut concilier les deux modes de réalisations décrits dans les deux paragraphes précédents, la valeur du paramètre « *adpRLCEnabled* » - ou « *adpEnableRLC* » - pouvant être configurée par un noeud tel le concentrateur. Cette valeur de *« adpRLCEnabled »* - ou *« adpEnableRLC* » - est ignorée dans le premier mode de fonctionnement.

Les étapes 100, 105, 110, 115, 120, 125, 130, 140, 145, 150 et 155 de la Fig. 2 sont identiques aux mêmes étapes décrites précédemment dans la Fig. 1.

Dans l'étape 200, qui remplace l'étape 135 du procédé illustré dans la Fig. 1, le premier noeud P détermine le mode de fonctionnement du premier noeud P associé au deuxième noeud D. Il est à noter qu'un mode de fonctionnement pour le premier noeud P est associé pour chaque noeud voisin. Dit autrement, le premier noeud P détermine un mode de fonctionnement pour chaque lien du premier noeud P, chaque lien pouvant potentiellement être symétrique ou non. Avantageusement, le procédé RLC de détermination d'un coût de lien n'est donc pas systématiquement activé pour un message reçu en provenance de chaque voisin du premier noeud P. Cela permet de réduire l'envoi de messages lors d'un procédé RLC de détermination d'un coût indirect d'un lien, le procédé n'étant potentiellement réalisé que pour certains liens du premier noeud P. Le premier noeud P peut comprendre, par exemple dans une table des voisins, une information indiquant le mode de fonctionnement du premier noeud P associé à chaque voisin. Cette solution est avantageuse par rapport au procédé décrit dans la Fig.1, puisque dans ce dernier l'activation du procédé RLC de détermination d'un coût indirect d'un lien est forcément globale, ce qui mène à des congestions ou à la saturation du média partagé. L'étape 200, qui permet une activation du procédé RLC lien par lien (c'est-à-dire, voisin par voisin) pour le premier noeud P permet de réduire les phénomènes de congestion ou saturation.

L'étape 300 est une étape de sélection du mode de fonctionnement associé au deuxième noeud D, ladite étape de sélection étant exécutée par le premier noeud P de façon autonome en fonction de un ou plusieurs critères déterminés par le premier noeud P. Dit autrement, possiblement de façon ponctuelle, périodique ou continue, le premier noeud P sélectionne, pour chaque deuxième noeud D, un mode de fonctionnement associé, et ce de façon autonome. L'étape 300 est détaillée ci-après.

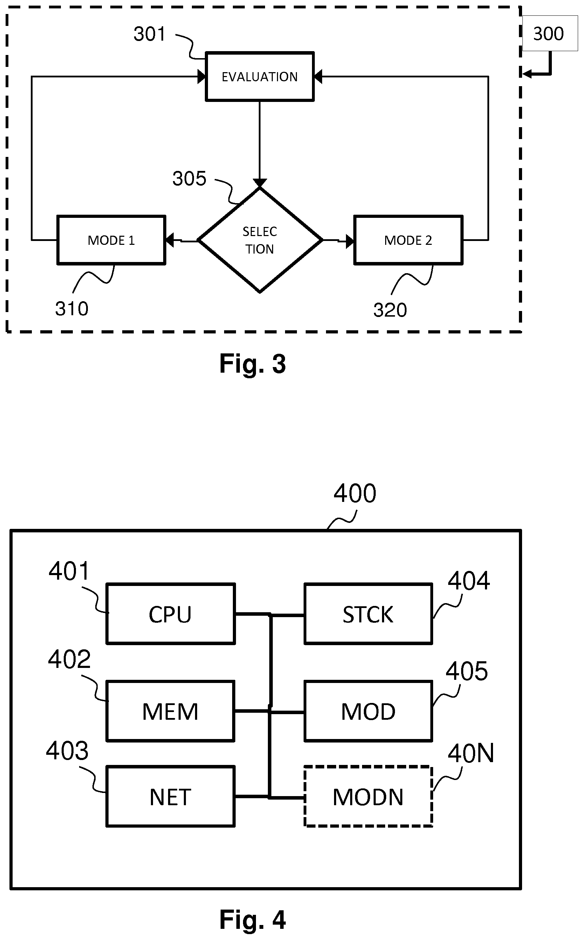

La Fig. 3 illustre schématiquement l'étape 300 permettant de sélectionner un mode de fonctionnement du premier noeud P selon un mode de réalisation de l'invention. L'étape 300 de sélection d'un mode de fonctionnement comprend possiblement :
- une étape 301 d'évaluation de différents critères déterminés par le premier noeud P,
- une étape 305 de sélection, selon l'étape 301 d'évaluation, du premier mode de fonctionnement (étape 310) ou du deuxième mode de fonctionnement (étape 320).

Ces étapes 301, 305 et 310/320 sont potentiellement réalisées par le premier noeud P séquentiellement de façon ponctuelle, périodique ou continue, et ce pour chaque noeud voisin du premier noeud P.

Selon un mode de réalisation de l'invention, l'étape 301 d'évaluation s'appuie sur les critères suivants :
- un nombre d'erreurs de transmission de messages à destination du deuxième noeud D,
- une caractéristique du deuxième noeud D, comme par exemple son adresse source, et,
- une comparaison entre une mesure de la qualité de réception d'un message et une information de qualité déterminée en fonction d'un paramètre dudit message.

Ainsi, de nombreuses erreurs de transmissions sur un lien peuvent être liées à une mauvaise réception par le noeud voisin concerné, et potentiellement être révélatrices d'une asymétrie dudit lien. Selon un mode de réalisation de l'invention, l'étape 301 d'évaluation peut comprendre l'étape de, durant un temps prédéterminé, comptabiliser un nombre d'erreurs de transmission de messages envoyés par le premier noeud P vers le deuxième noeud. Ainsi, lorsque le nombre d'erreurs comptabilisées dépasse une première valeur, alors le premier noeud P sélectionne (étape 305) le premier mode de fonctionnement (étape 310), sinon, le deuxième mode de fonctionnement (étape 320).

Selon un mode de réalisation alternatif de l'invention, l'étape 301 d'évaluation peut comprendre l'étape de, durant un temps prédéterminé, comptabiliser un nombre d'erreurs de transmission de messages envoyés par le premier noeud P vers le deuxième noeud D, et, lorsque le ratio entre le nombre d'erreurs comptabilisées et le nombre de messages envoyés par le premier noeud P vers le deuxième noeud D dépasse une deuxième valeur, alors le premier noeud P sélectionne (étape 305) le premier mode de fonctionnement (étape 310), sinon, le premier noeud P sélectionne le deuxième mode de fonctionnement (étape 320).

Comme expliqué précédemment, certains noeuds peuvent être situés près de sources d'interférences connues et fréquentes, comme c'est souvent le cas du concentrateur. On peut alors décider, pour chaque noeud voisin du concentrateur, de sélectionner le premier mode de fonctionnement pour le lien vers le concentrateur. Cela se fait par exemple en prenant en considération l'adresse source du message de détermination d'une route.

Le premier noeud P peut aussi comparer une mesure de qualité de réception d'un message, par exemple un LQI, avec une information de qualité retrouvée dans une table des voisins enregistrée par le premier noeud P et déterminée en fonction de la réception d'un message TMR (« *ToneMap Response* » en anglais) pour ce voisin. La table des voisins est enregistrée par le premier noeud P et contient des informations, pour chaque voisin du premier noeud P, déterminées en fonction des messages TMR reçus par le premier noeud P. Ainsi, selon un mode de réalisation de l'invention, l'étape 301 d'évaluation peut comprendre les étapes de :
- recevoir un message en provenance du deuxième noeud D,
- déterminer une mesure de la qualité de réception du message reçu, par exemple un LQI associé,
- déterminer une information de qualité de réception d'un message reçu par le deuxième noeud D par consultation de la table des voisins du premier noeud P pour ce second noeud D,
- lorsque la différence entre la qualité mesurée, par exemple le LQI, et la qualité déterminée, par exemple via la consultation de la table des voisins, dépasse une troisième valeur, alors sélectionner (étape 305) le premier mode de fonctionnement (étape 310),
- sinon, sélectionner (étape 305) le deuxième mode de fonctionnement (étape 320).

La **Fig. 4** illustre schématiquement l'architecture matérielle d'un dispositif électronique (ou noeud) 400 d'un réseau de communication maillé, le dispositif électronique 400 étant adapté pour déterminer un coût d'un lien entre ledit dispositif électronique 400 et un dispositif électronique voisin du réseau de communication maillé pour un protocole de routage, selon un mode de réalisation de l'invention. Le dispositif électronique 400 correspond par exemple au premier noeud P précédemment décrit.

Le dispositif électronique 400 comprend, associé au dispositif électronique voisin, un premier et un deuxième mode de fonctionnement, le dispositif électronique 400 étant adapté pour :
- recevoir en provenance du dispositif électronique voisin un premier message de détermination d'une route entre deux dispositifs électroniques du réseau de communication,
- déterminer un premier coût du lien en fonction d'une mesure d'une qualité de réception du premier message,
- déterminer le mode de fonctionnement du dispositif électronique associé au dispositif électronique voisin, et,
- quand le dispositif électronique est dans le premier mode de fonctionnement, alors :
   - envoyer à destination du dispositif électronique voisin un deuxième message comprenant une instruction de mesure par le dispositif électronique voisin d'une qualité de réception dudit deuxième message afin de déterminer un deuxième coût du lien, et,
   - recevoir, en provenance du dispositif électronique voisin, un troisième message, le troisième message comprenant le deuxième coût du lien,
   - déterminer le coût du lien en fonction du premier coût et du deuxième coût,
le dispositif électronique étant adapté pour sélectionner le mode de fonctionnement associé au dispositif électronique voisin de façon autonome en fonction de un ou plusieurs critères déterminés par le dispositif électronique.

Le dispositif électronique 400 comporte, reliés par un bus de communication : un processeur ou CPU (« *Central Processing Unit* » en anglais) 401 ; une mémoire MEM 402 de type RAM (« *Random Access Memory* » en anglais) et/ou ROM (« *Read Only Memory* » en anglais), un module réseau NET 403, un module de stockage STCK 404 de type stockage interne et possiblement d'autres modules 405 à 40N de différentes natures. Le module de stockage STCK 404 peut être de type disque dur HDD (« *Hard Disk Drive* » en anglais) ou SSD (« *Solid-State Drive* » en anglais), ou de type lecteur de support de stockage externe, tel un lecteur de cartes SD (« *Secure Digital »* en anglais). Le processeur CPU 401 peut enregistrer des données, ou informations, dans la mémoire MEM 402 ou dans le module de stockage STCK 404. Le processeur CPU 401 peut lire des données enregistrées dans la mémoire MEM 402 ou dans le module de stockage STCK 404. Ces données peuvent correspondre à des paramètres de configuration, des paramètres de qualités liés à des messages reçus ou à des informations reçues par exemple dans un message reçu via le module réseau NET 403, ou via un autre module de communication 40N. Le module réseau NET 403 permet la connexion du dispositif électronique 400 à un réseau de communication maillé via un média partagé, par exemple un réseau électrique. Le module réseau NET 403 peut permettre la connexion du dispositif électronique 400 à un dispositif électronique tel qu'un Concentrateur, par exemple via une technologie de type CPL (Courant Porteur en Ligne). Le module réseau NET 403 permet au dispositif électronique 400 d'envoyer, respectivement de recevoir, des messages à destination de, respectivement en provenance de, un ou plusieurs dispositifs électroniques voisins, lesdits dispositifs électroniques étant connectés au même réseau de communication maillé via le média partagé.

Le processeur CPU 401 est capable d'exécuter des instructions chargées dans la mémoire MEM 402, par exemple à partir du module de stockage STCK 404 ou d'un réseau de communication via le module réseau NET 403, ou d'un autre module de communication 40N par exemple. Lorsque le dispositif électronique 400 est mis sous tension, le processeur CPU 401 est capable de lire de la mémoire MEM 402 des instructions et de les exécuter. Ces instructions forment un programme d'ordinateur causant la mise en oeuvre, par le processeur CPU 401, de tout ou partie des procédés et étapes décrits ci-avant, particulièrement dans la description des Figs. 2 et 3. Ainsi, tout ou partie des procédés et étapes décrits ci-avant peut être implémenté sous forme logicielle par exécution d'un ensemble d'instructions par une machine programmable, telle qu'un DSP (« *Digital Signal Processor »* en anglais) ou un microcontrôleur. Tout ou partie des procédés et étapes décrits ici peuvent aussi être implémentés sous forme matérielle par une machine ou un composant dédié, tel qu'un FPGA (« *Field-Programmable Gate Array »* en anglais) ou un ASIC (« *Application-Specific Integrated Circuit »* en anglais). Les fonctions du dispositif électronique 400 peuvent être intégrées dans un compteur communicant ou un concentrateur d'un réseau de communication maillé par mise à jour d'un logiciel (mise à jour du « *firmware* » en anglais).

Les références à la norme (ou au protocole) G3-PLC dans le présent document sont faites pour la version de la norme G3-PLC telle que publiée en avril 2015.

## Revendications

1. Procédé de détermination d'un coût d'un lien entre un premier dispositif électronique (400) et un deuxième dispositif électronique pour un protocole de routage d'un réseau de communication maillé comprenant lesdits dispositifs électroniques, le premier dispositif électronique comprenant, associé au deuxième dispositif électronique, un premier et un deuxième mode de fonctionnement, le procédé étant exécuté par le premier dispositif électronique et comprenant les étapes de :
- recevoir (100) en provenance du deuxième dispositif électronique un premier message de détermination d'une route entre deux dispositifs électroniques du réseau de communication,
- déterminer (105) un premier coût du lien en fonction d'une mesure d'une qualité de réception du premier message,
- déterminer (200) le mode de fonctionnement du premier dispositif électronique associé au deuxième dispositif électronique, et,
- quand le premier dispositif électronique est dans le premier mode de fonctionnement, alors :
- envoyer (140) à destination du deuxième dispositif électronique un deuxième message comprenant une instruction de mesure par le deuxième dispositif électronique d'une qualité de réception dudit deuxième message afin de déterminer un deuxième coût du lien, et,
- recevoir (140), en provenance du deuxième dispositif électronique, un troisième message, le troisième message comprenant le deuxième coût du lien,
- déterminer (145) le coût du lien en fonction du premier coût et du deuxième coût,
- ou, quand le premier dispositif électronique est dans le deuxième mode de fonctionnement, déterminer le coût du lien comme étant égal au premier coût du lien,
le procédé étant **caractérisé en ce qu'**il comprend une étape de sélection (300) du mode de fonctionnement associé au deuxième dispositif électronique, ladite étape de sélection étant exécutée par le premier dispositif électronique de façon autonome en fonction de un ou plusieurs critères déterminés par le premier dispositif électronique parmi :
- un nombre d'erreurs de transmission de messages à destination du deuxième dispositif électronique,
- une caractéristique du deuxième dispositif électronique, et,
- une comparaison entre une mesure de la qualité de réception d'un message et une information de qualité déterminée en fonction d'un paramètre dudit message.

2. Procédé selon la revendication 1, le procédé étant **caractérisé en ce que** l'étape de sélection (300) du mode de fonctionnement associé au deuxième dispositif électronique comprend les étapes suivantes :
- durant un temps prédéterminé, comptabiliser un nombre d'erreurs de transmission de messages envoyés par le premier dispositif électronique vers le deuxième dispositif électronique, et,
- lorsque le nombre d'erreurs comptabilisées dépasse une première valeur, alors sélectionner le premier mode de fonctionnement,
- sinon, sélectionner le deuxième mode de fonctionnement.

3. Procédé selon la revendication 1, le procédé étant **caractérisé en ce que** l'étape de sélection (300) du mode de fonctionnement associé au deuxième dispositif électronique comprend les étapes suivantes :
- durant un temps prédéterminé, comptabiliser un nombre d'erreurs de transmission de messages envoyés par le premier dispositif électronique vers le deuxième dispositif électronique, et,
- lorsque le ratio entre le nombre d'erreurs comptabilisées et le nombre de messages envoyés par le premier dispositif électronique vers le deuxième dispositif électronique dépasse une deuxième valeur, alors sélectionner le premier mode de fonctionnement,
- sinon, sélectionner le deuxième mode de fonctionnement.

4. Procédé selon la revendication 1, le procédé étant **caractérisé en ce que** l'étape de sélection (300) du mode de fonctionnement associé au deuxième dispositif électronique comprend les étapes suivantes :
- recevoir un message en provenance du deuxième dispositif électronique,
- mesurer une qualité de réception du message reçu,
- déterminer une qualité de réception d'un message reçu par le deuxième dispositif électronique en fonction d'une information associée au deuxième noeud retrouvée dans une table des voisins enregistrée par le premier noeud,
- lorsque la différence entre la qualité mesurée et la qualité déterminée dépasse une troisième valeur, alors sélectionner le premier mode de fonctionnement,
- sinon, sélectionner le deuxième mode de fonctionnement.

5. Dispositif électronique (400) d'un réseau de communication maillé, le dispositif électronique étant adapté pour déterminer un coût d'un lien entre ledit dispositif électronique et un dispositif électronique voisin du réseau de communication maillé pour un protocole de routage, le dispositif électronique comprenant, associé au dispositif électronique voisin, un premier et un deuxième mode de fonctionnement, le dispositif électronique étant adapté pour :
- recevoir en provenance du dispositif électronique voisin un premier message de détermination d'une route entre deux dispositifs électroniques du réseau de communication,
- déterminer un premier coût du lien en fonction d'une mesure d'une qualité de réception du premier message,
- déterminer le mode de fonctionnement du dispositif électronique associé au dispositif électronique voisin, et,
- quand le dispositif électronique est dans le premier mode de fonctionnement, alors :
- envoyer à destination du dispositif électronique voisin un deuxième message comprenant une instruction de mesure par le dispositif électronique voisin d'une qualité de réception dudit deuxième message afin de déterminer un deuxième coût du lien, et,
- recevoir, en provenance du dispositif électronique voisin, un troisième message, le troisième message comprenant le deuxième coût du lien,
- déterminer le coût du lien en fonction du premier coût et du deuxième coût,
- ou, quand le dispositif électronique est dans le deuxième mode de fonctionnement, déterminer le coût du lien comme étant égal au premier coût du lien,
le dispositif électronique étant **caractérisé en ce qu'**il est adapté pour sélectionner le mode de fonctionnement associé au dispositif électronique voisin de façon autonome en fonction de un ou plusieurs critères déterminés par le dispositif électronique parmi :
- un nombre d'erreurs de transmission de messages à destination du deuxième dispositif électronique,
- une caractéristique du deuxième dispositif électronique, et,
- une comparaison entre une mesure de la qualité de réception d'un message et une information de qualité déterminée en fonction d'un paramètre dudit message.

6. Programme d'ordinateur, **caractérisé en ce qu'**il comprend des instructions pour mettre en oeuvre, par un processeur (401) d'un premier dispositif électronique, le procédé de détermination d'un coût d'un lien entre le premier dispositif électronique et un deuxième dispositif électronique pour un protocole de routage d'un réseau de communication maillé comprenant lesdits dispositifs électroniques, selon l'une des revendications 1 à 4, lorsque le programme d'ordinateur est exécuté par le processeur.

7. Support d'enregistrement, lisible par un dispositif électronique, sur lequel est stocké le programme d'ordinateur selon la revendication précédente.

## Patentansprüche

1. Verfahren zur Bestimmung von Kosten einer Verknüpfung zwischen einer ersten elektronischen Vorrichtung (400) und einer zweiten elektronischen Vorrichtung für ein Routing-Protokoll eines die elektronischen Vorrichtungen enthaltenden vermaschten Kommunikationsnetzwerks, wobei die erste elektronische Vorrichtung, der zweiten elektronischen Vorrichtung zugeordnet, eine erste und eine zweite Betriebsart enthält, wobei das Verfahren von der ersten elektronischen Vorrichtung ausgeführt wird und die Schritte enthält:
- von der zweiten elektronischen Vorrichtung kommend eine erste Bestimmungsnachricht einer Route zwischen zwei elektronischen Vorrichtungen des Kommunikationsnetzwerks zu empfangen (100),
- erste Kosten der Verknüpfung abhängig von einer Messung einer Empfangsqualität der ersten Nachricht zu bestimmen (105),
- die der zweiten elektronischen Vorrichtung zugeordnete Betriebsart der ersten elektronischen Vorrichtung zu bestimmen (200), und,
- wenn die erste elektronische Vorrichtung in der ersten Betriebsart ist, dann:
- eine für die zweite elektronische Vorrichtung bestimmte zweite Nachricht zu senden (140), die eine Anweisung zur Messung durch die zweite elektronische Vorrichtung einer Empfangsqualität der zweiten Nachricht enthält, um zweite Kosten der Verknüpfung zu bestimmen, und
- von der zweiten elektronischen Vorrichtung kommend eine dritte Nachricht zu empfangen (140), wobei die dritte Nachricht die zweiten Kosten der Verknüpfung enthält,
- die Kosten der Verknüpfung abhängig von den ersten Kosten und den zweiten Kosten zu bestimmen (145),
- oder, wenn die erste elektronische Vorrichtung in der zweiten Betriebsart ist, die Kosten der Verknüpfung als gleich den ersten Kosten der Verknüpfung zu bestimmen,
wobei das Verfahren **dadurch gekennzeichnet ist, dass** es einen Schritt der Auswahl (300) der der zweiten elektronischen Vorrichtung zugeordneten Betriebsart enthält, wobei der Auswahlschritt von der ersten elektronischen Vorrichtung autonom ausgeführt wird, abhängig von einem oder mehreren von der ersten elektronischen Vorrichtung bestimmten Kriterien unter:
- einer Anzahl von Übertragungsfehlern von für die zweite elektronische Vorrichtung bestimmten Nachrichten,
- einem Merkmal der zweiten elektronischen Vorrichtung, und
- einem Vergleich zwischen einer Messung der Empfangsqualität einer Nachricht und einer abhängig von einem Parameter der Nachricht bestimmten Qualitätsinformation.

2. Verfahren nach Anspruch 1, wobei das Verfahren **dadurch gekennzeichnet ist, dass** der Auswahlschritt (300) der der zweiten elektronischen Vorrichtung zugeordneten Betriebsart die folgenden Schritte enthält:
- während einer vorherbestimmten Zeit eine Anzahl von Übertragungsfehlern von von der ersten elektronischen Vorrichtung an die zweite elektronische Vorrichtung geschickten Nachrichten zu erfassen, und
- wenn die Anzahl von erfassten Fehlern einen ersten Wert überschreitet, die erste Betriebsart auszuwählen,
- andernfalls die zweite Betriebsart auszuwählen.

3. Verfahren nach Anspruch 1, wobei das Verfahren **dadurch gekennzeichnet ist, dass** der Auswahlschritt (300) der der zweiten elektronischen Vorrichtung zugeordneten Betriebsart die folgenden Schritte enthält:
- während einer vorherbestimmten Zeit eine Anzahl von Übertragungsfehlern von von der ersten elektronischen Vorrichtung an die zweite elektronische Vorrichtung geschickten Nachrichten zu erfassen, und
- wenn das Verhältnis zwischen der Anzahl von erfassten Fehlern und der Anzahl von von der ersten elektronischen Vorrichtung an die zweite elektronische Vorrichtung geschickten Nachrichten einen zweiten Wert überschreitet, die erste Betriebsart auszuwählen,
- andernfalls die zweite Betriebsart auszuwählen.

4. Verfahren nach Anspruch 1, wobei das Verfahren **dadurch gekennzeichnet ist, dass** der Auswahlschritt (300) der der zweiten elektronischen Vorrichtung zugeordneten Betriebsart die folgenden Schritte enthält:
- eine von der zweiten elektronischen Vorrichtung kommende Nachricht zu empfangen,
- eine Empfangsqualität der empfangenen Nachricht zu messen,
- eine Empfangsqualität einer durch die zweite elektronische Vorrichtung empfangenen Nachricht abhängig von einer dem zweiten Knoten zugeordneten Information zu bestimmen, die in einer vom ersten Knoten gespeicherten Nachbar-Tabelle gefunden wird,
- wenn die Differenz zwischen der gemessenen Qualität und der bestimmten Qualität einen dritten Wert überschreitet, dann die erste Betriebsart auszuwählen,
- andernfalls die zweite Betriebsart auszuwählen.

5. Elektronische Vorrichtung (400) eines vermaschten Kommunikationsnetzwerks, wobei die elektronische Vorrichtung geeignet ist, Kosten einer Verknüpfung zwischen der elektronischen Vorrichtung und einer benachbarten elektronischen Vorrichtung des vermaschten Kommunikationsnetzwerks für ein Routing-Protokoll zu bestimmen, wobei die elektronische Vorrichtung, der benachbarten elektronischen Vorrichtung zugeordnet, eine erste und eine zweite Betriebsart enthält, wobei die elektronische Vorrichtung geeignet ist:
- von der benachbarten elektronischen Vorrichtung kommend eine erste Bestimmungsnachricht einer Route zwischen zwei elektronischen Vorrichtungen des Kommunikationsnetzwerks zu empfangen,
- erste Kosten der Verknüpfung abhängig von einer Messung einer Empfangsqualität der ersten Nachricht zu bestimmen,
- die der benachbarten elektronischen Vorrichtung zugeordnete Betriebsart der elektronischen Vorrichtung zu bestimmen, und
- wenn die elektronische Vorrichtung in der ersten Betriebsart ist, dann:
- eine für die benachbarte elektronische Vorrichtung bestimmte zweite Nachricht zu schicken, die eine Anweisung zur Messung durch die benachbarte elektronische Vorrichtung einer Empfangsqualität der zweiten Nachricht enthält, um zweite Kosten der Verknüpfung zu bestimmen, und
- von der benachbarten elektronischen Vorrichtung kommend eine dritte Nachricht zu empfangen, wobei die dritte Nachricht die zweiten Kosten der Verknüpfung enthält,
- die Kosten der Verknüpfung abhängig von den ersten Kosten und den zweiten Kosten zu bestimmen,
- oder, wenn die elektronische Vorrichtung in der zweiten Betriebsart ist, die Kosten der Verknüpfung als gleich den ersten Kosten der Verknüpfung zu bestimmen,
wobei die elektronische Vorrichtung **dadurch gekennzeichnet ist, dass** sie geeignet ist, die der benachbarten elektronischen Vorrichtung zugeordnete Betriebsart autonom auszuwählen, abhängig von einem oder mehreren von der elektronischen Vorrichtung bestimmten Kriterien unter:
- einer Anzahl von Übertragungsfehlern von für die zweite elektronische Vorrichtung bestimmten Nachrichten,
- einem Merkmal der zweiten elektronischen Vorrichtung, und
- einem Vergleich zwischen einer Messung der Empfangsqualität einer Nachricht und einer abhängig von einem Parameter der Nachricht bestimmten Qualitätsinformation.

6. Computerprogramm, **dadurch gekennzeichnet, dass** es Anweisungen zur Durchführung, durch einen Prozessor (401) einer ersten elektronischen Vorrichtung, des Verfahrens zur Bestimmung von Kosten einer Verknüpfung zwischen der ersten elektronischen Vorrichtung und einer zweiten elektronischen Vorrichtung für ein Routing-Protokoll eines die elektronischen Vorrichtungen enthaltenden vermaschten Kommunikationsnetzwerks nach einem der Ansprüche 1 bis 4 enthält, wenn das Computerprogramm vom Prozessor ausgeführt wird.

7. Speicherträger, lesbar von einer elektronischen Vorrichtung, auf dem das Computerprogramm nach dem vorhergehenden Anspruch gespeichert ist.

## Claims

1. Method for determining a cost of a link between a first electronic device (400) and a second electronic device for a routing protocol of a mesh communication network comprising said electronic devices, the first electronic device comprising, associated with the second electronic device, a first and a second operating mode, the method being executed by the first electronic device and comprising the steps of:
- receiving (100), from the second electronic device, a first message to determine a route between two electronic devices of the communication network,
- determining (105) a first cost of the link in accordance with a measurement of a quality of reception of the first message,
- determining (200) the operating mode of the first electronic device associated with the second electronic device, and,
- when the first electronic device is in the first operating mode, then:
- sending (140), to the second electronic device, a second message comprising an instruction for the second electronic device to measure a quality of reception of said second message in order to determine a second cost of the link, and
- receiving (140), from the second electronic device, a third message, the third message comprising the second cost of the link,
- determining (145) the cost of the link in accordance with the first cost and with the second cost,
- or, when the first electronic device is in the second operating mode, determining the cost of the link as being equal to the first cost of the link,
the method being **characterized in that** it comprises a step of selecting (300) the operating mode associated with the second electronic device, said selection step being executed by the first electronic device autonomously in accordance with one or more criteria determined by the first electronic device from among:
- a number of errors in the transmission of messages to the second electronic device,
- a characteristic of the second electronic device, and
- a comparison between a measurement of the quality of reception of a message and quality information determined in accordance with a parameter of said message.

2. Method according to Claim 1, the method being **characterized in that** the step of selecting (300) the operating mode associated with the second electronic device comprises the following steps:
- during a predetermined period, counting a number of errors in the transmission of messages sent by the first electronic device to the second electronic device, and
- when the number of errors counted exceeds a first value, then selecting the first operating mode,
- otherwise, selecting the second operating mode.

3. Method according to Claim 1, the method being **characterized in that** the step of selecting (300) the operating mode associated with the second electronic device comprises the following steps:
- during a predetermined period, counting a number of errors in the transmission of messages sent by the first electronic device to the second electronic device and
- when the ratio between the number of errors counted and the number of messages sent by the first electronic device to the second electronic device exceeds a second value, then selecting the first operating mode,
- otherwise, selecting the second operating mode.

4. Method according to Claim 1, the method being **characterized in that** the step of selecting (300) the operating mode associated with the second electronic device comprises the following steps:
- receiving a message from the second electronic device,
- measuring a quality of reception of the message received,
- determining a quality of reception of a message received by the second electronic device in accordance with information associated with the second node and found in a neighbour table stored by the first node,
- when the difference between the quality measured and the quality determined exceeds a third value, then selecting the first operating mode,
- otherwise, selecting the second operating mode.

5. Electronic device (400) of a mesh communication network, the electronic device being adapted to determine a cost of a link between said electronic device and a neighbouring electronic device of the mesh communication network for a routing protocol, the electronic device comprising, associated with the neighbouring electronic device, a first and a second operating mode, the electronic device being adapted to:
- receive, from the neighbouring electronic device, a first message to determine a route between two electronic devices of the communication network,
- determine a first cost of the link in accordance with a measurement of a quality of reception of the first message,
- determine the operating mode of the electronic device associated with the neighbouring electronic device, and,
- when the electronic device is in the first operating mode, then:
- send, to the neighbouring electronic device, a second message comprising an instruction for the neighbouring electronic device to measure a quality of reception of said second message in order to determine a second cost of the link, and
- receive, from the neighbouring electronic device, a third message, the third message comprising the second cost of the link,
- determine the cost of the link in accordance with the first cost and with the second cost,
- or, when the electronic device is in the second operating mode, determine the cost of the link as being equal to the first cost of the link,
the electronic device being **characterized in that** it is adapted to select the operating mode associated with the neighbouring electronic device autonomously in accordance with one or more criteria determined by the electronic device from among:
- a number of errors in the transmission of messages to the second electronic device,
- a characteristic of the second electronic device, and
- a comparison between a measurement of the quality of reception of a message and quality information determined in accordance with a parameter of said message.

6. Computer program, **characterized in that** it comprises instructions for a processor (401) of a first electronic device to implement the method for determining a cost of a link between the first electronic device and a second electronic device for a routing protocol of a mesh communication network comprising said electronic devices, according to one of Claims 1 to 4, when the computer program is executed by the processor.

7. Storage medium, which can be read by an electronic device, on which the computer program according to the preceding claim is stored.
